# EUROPÄISCHE PATENTSCHRIFT

(11) **EP 0 525 218 B1**
(45) Veröffentlichungstag und Bekanntmachung des Hinweises auf die Patenterteilung: **24.03.1993**
(21) Anmeldenummer: 91111955.0
(22) Anmeldetag: 17.07.1991
(51) Int. Cl.: B60H 1/00

(54) **Heiz- und/oder Klimagerät mit luftseitiger Temperatureinstellung für ein Kraftfahrzeug**
Heating and/or airconditioning device with air mixture temperature control for a motor vehicle
Appareilage de chauffage et/ou de climatisation pour véhicule automobile avec regulation de la temperature de ventilation

(43) Veröffentlichungstag der Anmeldung: 03.02.1993
(73) Patentinhaber: SIEMENS AKTIENGESELLSCHAFT, 80333 München (DE)
(72) Erfinder: Petters, Siegfried, Ing. (grad.), W-8636 Weitramsdorf (DE); Riehl, Horst, Dipl.-Ing., W-8634 Rodach (DE)

(56) Entgegenhaltungen:
- DE-A- 3 738 425
- DE-A- 3 924 317
- GB-A- 518 122
- US-A- 2 277 089
- US-A- 2 334 915

## Beschreibung

Die Erfindung bezieht sich auf ein Heiz- und/oder Klimagerät mit luftseitiger Temperatureinstellung für ein Kraftfahrzeug gemäß Oberbegriff des Hauptanspruchs; ein derartiges Heizund/oder Klimagerät ist aus der EP-A1-0 419 707 bekannt.

Bei dem bekannten Heiz- und/oder Klimagerät mit luftseitiger Temperatureinstellung wird die als Frischluft oder Umluft von einem Gebläse eingangsseitig geförderte Luft entweder direkt oder über einen Flach-Wärmetauscher in eine Mischkammer gefördert, an die ausgangsseitig zumindest ein Fußraum-Luftkanal und ein Defrost-Luftkanal angeschlossen sind. Eine in dem Mischraum schwenkbar gelagerte Mischluftklappe kann mit Zwischenstellungen zwischen einer völligen Schließstellung zum Frischluftzutritt einerseits und einer völligen Schließstellung zum Warmluftzutritt andererseits derart verschwenkt werden, daß den an den Ausgang des Mischraums angeschlossenen Luftkanälen entweder von dem Wärmetauscher völlig unbeeinflußte Frisch- bzw. Umluft oder eine durch Beimischen eines mehr oder weniger großen, über den Wärmetauscher geförderten Luftanteils temperierte Luft mit einer entsprechend höheren Ausblastemperatur zugeführt wird. Durch Zweiteilung des Mischraums in zwei benachbarte Hälften mit je einer Mischluftklappe kann eine getrennte linksseitige bzw. rechtsseitige Temperatureinstellung erreicht werden. Die an eine derartige Mischkammer ausgangsseitig angeschlossenen Luftkanäle können nur über gegebenenfalls mehrfache Abwinklungen zu den Ausströmdüsen im Fußraum, an der Frontscheibe oder zu den Seitenscheiben mit entsprechend relativ hohem luftseitigen Anlagenwiderstand geführt werden.

Durch die DE-A-39 24 317 ist eine Heizungs- und/oder Klimaanlage für Kraftfahrzeuge mit wasserseitiger Temperatureinstellung bekannt, deren Wärmetauscher annähernd U-förmig gebogen ist, derart daß die von einem zentral innerhalb des Wärmetauschers angeordneten Gebläse geförderte Frisch- bzw. Umluft entweder radial durch den Wärmetauscher in Fußraum- und Defrost-Luftkanäle für die rechte bzw. linke Fahrzeugseite oder durch den zwischen den Schenkeln des U-förmig gebogenen Wärmetauschers verbleibenden offenen Bereich zu einem vorzugsweise mit Düsen der Mittelebene des Kraftfahrzeuges in Verbindung stehenden Frischluftraum gefördert wird. Nach einer Ausgestaltung ist vorgesehen, daß im Bereich der oberen Schenkel des U-förmig gebogenen Wärmetauschers durch Einzelklappen verschließbare zusätzliche Verbindungskanäle von der Warmluftseite zu dem Frischluftraum verlaufen, um die Kaltluft in der Mittelebene temperieren zu können.

Durch die US-A-2 334 915, FIG 10;11 ist weiterhin ein Sitz-Heizer bekannt, bei dem innerhalb eines teilringförmigen Wärmetauschers ein Axiallüfterrad angeordnet ist, das je nach Stellung einer Anordnung von mehreren saugseitigen Klappen Frischluft bzw. Umluft in variablem Mischungsverhältnis über den Wärmetauscher in den Umgebungsraum fördert.

Gemäß Aufgabe vorliegender Erfindung soll ein luftseitig gesteuertes Heiz- und/oder Klimagerät geschaffen werden, das bei kompakter und einfacher Bauweise eine unerwünschte Temperierung der Frischlufträume durch den Wärmetauscher verhindert und eine Minderung des luftseitigen Anlagenwiderstandes, insbesondere bei getrennter linksseitiger bzw. rechtsseitiger Temperatureinstellung, ermöglicht. Die Lösung dieser Aufgabe gelingt bei einem Heiz- und/oder Klimagerät der eingangs genannten Art durch die Lehre des Anspruchs 1; vorteilhafte Ausgestaltungen der Erfindung sind jeweils Gegenstand der Unteransprüche.

Durch den vollringförmigen und somit über den gesamten Umfang wirksamen Wärmetauscher können im Vergleich zu einem U-förmig geöffneten Wärmetauscher die gleiche Temperierung bei geringerer Baugröße erreicht und durch die scheibenförmige axiale Hintereinanderordnung eines ebenfalls ringförmigen Warmluftkanals einerseits und Kaltluftkanals andererseits ohne unerwünschte Temperierung des Frischluftraumes eine Anordnung der Mischräume im Sinne möglichst kurzer und gradliniger ausgangsseitiger Luftkanäle zu den einzelnen Austrittsdüsen, z.B. im Fußraum, im Scheibenbereich oder im Mittelebenenbereich vorgesehen werden.

Nach einer ersten Ausgestaltung der Erfindung sind für ein Heiz- und/oder Klimagerät mit je einem linksseitigen und einem rechtsseitigen Fußraum-Luftkanal und Defrost-Luftkanal eine erste Mischkammer, z.B. für die linksseitige Temperatureinstellung, und eine gegenüberliegende zweite Mischkammer, z.B.für eine rechtsseitige Temperatureinstellung, derart angeordnet, daß ein Mittelebene-Mischraum mit einer Mittelebene-Mischluftklappe etwa mittig am Umfang verteilt zwischen den beiden vorgenannten Mischräumen in die Kaltluftkanal-Scheibe bzw. Warmluftkanal-Scheibe einmünden kann; auf gesonderte Warmluft-Zusatzkanäle zum Mittelebenen-Mischraum für eine Temperierung der Mittelebene kann dabei in vorteilhafter Weise verzichtet werden.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen
- FIG 1: ein erfindungsgemäßes Heiz- und/oder Klimagerät in einem radialen Schnittbild
- FIG 2: einen Teilschnitt des Gerätes gemäß FIG 1 im Schnittverlauf II-II bei einer Mischluftklappenstellung für Mischluftbetrieb
- FIG 3: im Teilausschnitt aus FIG 2 eine Mischluftklappenstellung für reinen Warmluftbetrieb
- FIG 4: in einem Teilausschnitt aus FIG 2 eine Mischluftklappenstellung für reinen Kaltluftbetrieb
- FIG 5: die Anordnung gemäß FIG 1 im Schnittverlauf V-V bei in Fahrtrichtung axial vor dem Wärmetauscher angeordneter Kaltluftkanal-Scheibe
- FIG 6: die Anordnung gemäß FIG 5 jedoch bei in Fahrtrichtung axial hinter dem Wärmetauscher angeordneter Kaltluftkanal-Scheibe.

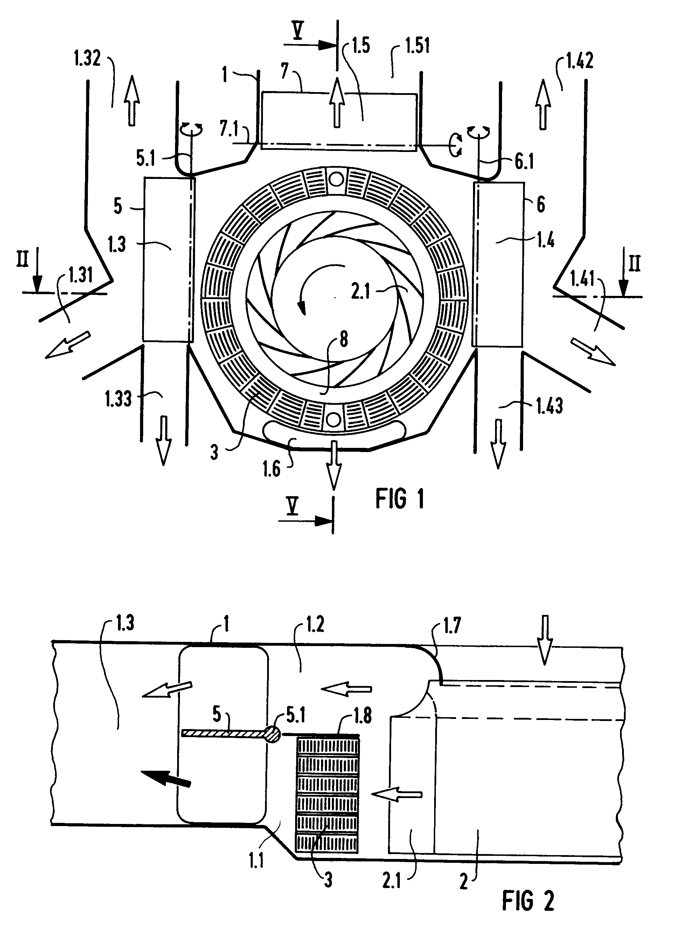

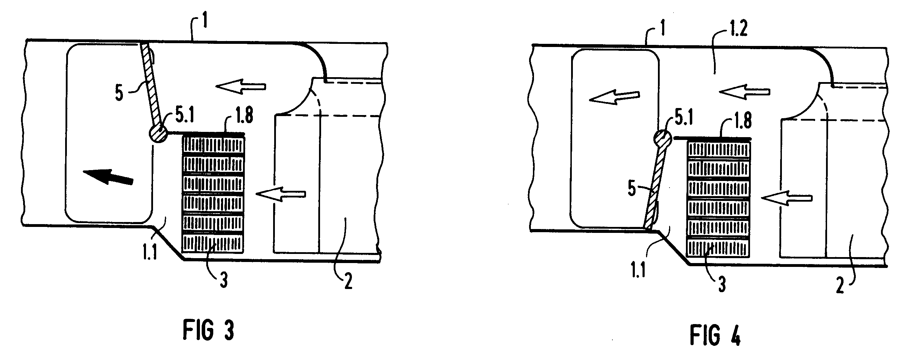

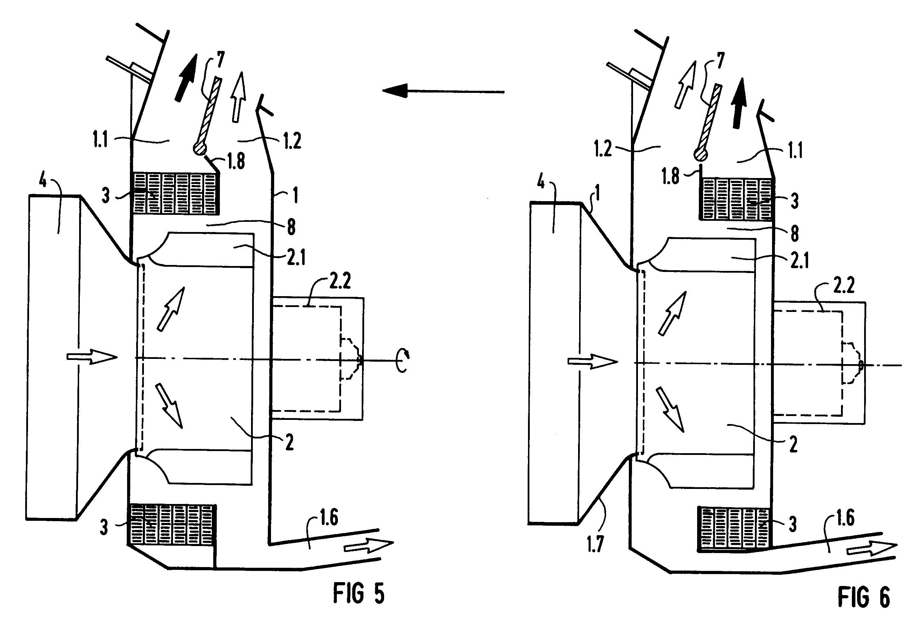

Das in den Figuren 1 bis 6 dargestellte Klimagerät für den Innenraum eines Kraftfahrzeuges weist ein Kunststoff-Gerätegehäuse 1 mit einem vollringförmigen und somit über 360° geschlossenen Wärmetauscher 3 auf, in dessen umschlossenem Kaltluftraum ein von einem Elektromotor 2.2 angetriebener Radial-Ventilator 2 angeordnet ist. An der eine Ventilatorgehäusehutze 1.7 aufweisenden Eintrittsseite des Radialventilators 2 ist - wie aus FIG 5,6 ersichtlich - ein Verdampfer 4 vorgeschaltet. In FIG 1 sind allgemein sämtliche Luftströmrichtungen mit gleichartigen Pfeilen angedeutet; in FIG 2-6 sind die Warmluftströmungen mit voll eingeschwärzten und die Kaltluftströmungen mit lediglich konturierten Pfeilen gekennzeichnet.

Das Gerätegehäuse 1 ist axial unterteilt in eine Warmluftkanal-Scheibe 1.1 und eine Kaltluftkanal-Scheibe 1.2, derart daß die von dem Radial-Ventilator 2 von außen über den Verdampfer 4 durch die Ventilatorgehäusehutze 1.7 axial angesaugte Frischluft bzw. Umluft radial umgelenkt und nach dem Austritt aus dem Schaufelkranz 2.1 des Radial-Ventilators 2 im Bereich eines Ringspaltes 8 sowohl durch den vollringförmigen Wärmetauscher 3 in den die Warmluftkanal-Scheibe 1.1 bildenden Gerätegehäuseteil als auch vor dem Wärmetauscher 8 axial umgelenkt in den axial benachbarten, die Kaltluftkanal-Scheibe 1.2 bildenden Gerätegehäuseteil eintreten kann. Die Warmluftkanal-Scheibe 1.1 und die unmittelbar axial benachbarte Kaltluftkanal-Scheibe 1.2 sind durch eine Trennwand 1.8 gegeneinander isoliert und getrennt.

In möglichst kurzen Kanalabständen zu den Düsen einer linksseitigen Temperatureinstellung bzw. den Düsen einer rechtsseitigen Temperatureinstellung ist an gegenüberliegenden Seiten der sich über den gesamten Umfang erstreckenden Warmluftkanal-Scheibe 1.1 bzw. Kaltluftkanal-Scheibe 1.2 ein erster Mischraum 1.3 mit daraus ausmündendem linkem Fußraum-Luftkanal 1.31, linkem Defrost-Luftkanal 1.32 und linkem Fondraum-Luftkanal 1.33 und ein zweiter Mischraum 1.4 mit daraus austretendem rechtem Fußraum-Luftkanal 1.41, rechtem Defrost-Luftkanal 1.42 und rechtem Fondraum-Luftkanal 1.43 angeschlossen. Mittig verteilt zwischen dem ersten Mischraum 1.3 und dem zweiten Mischraum 1.4 ist ein Mittelebene-Mischraum 1.5 an die Warmluftkanal-Scheibe 1.1 bzw. Kaltluftkanal-Scheibe 1.2 wiederum direkt angeschlossen, von dem ausgangsseitig kurzwegige Luftkanäle zu Düsen, z.B. im Armaturenbrett des Kraftfahrzeuges, führen. Zur luftseitigen Temperatureinstellung der aus den jeweiligen Mischräumen austretenden Luft sind eine erste Mischluftklappe 5 im ersten Mischraum 1.3, eine zweite Mischluftklappe 6 im zweiten Mischraum 1.4 und eine Mittelebene-Mischluftklappe 7 im Mittelebene-Mischraum 1.5 vorgesehen.

In konstruktiv einfacher und lufttechnisch wirksamer Weise sind die Mischluftklappen 5 bzw.6 bzw.7 jeweils an mündungsseitigen Enden der Trennwand 1.8 zwischen der Warmluftkanal-Scheibe 1.1 und der Kaltluftkanal-Scheibe 1.2 um Drehachsen 5.1 bzw.6.1 bzw.7.1 derart angelenkt, daß jede Mischluftklappe jeweils zwischen einer vollen Schließstellung der Warmluftkanal-Scheibe einerseits und der Kaltluftkanal-Scheibe andererseits mit Zwischenstellungen verschwenkbar ist. Durch die jeweilige Stellung der Mischluftklappen 5 bzw.6 bzw.7 wird das Mischungsverhältnis der aus der Kaltluftkanal-Scheibe 1.2 durch den ungeregelten Wärmetauscher 3 erwärmten Luft einerseits bzw. der aus der Kaltluftkanal-Scheibe 1.2 ohne Beeinflussung des Wärmetauschers 3 austretenden Frisch-bzw. Umluft gesteuert.

Zur zusätzlichen Frisch- bzw. Umluftversorgung des Fondraumes ist, vorzugsweise an der dem Mittelebene-Mischraum gegenüberliegenden Seite, aus der Kaltluftkanal-Scheibe 1.2 ein Fondraum-Kaltluftkanal 1.6 abgezweigt.

Sämtliche aus den Mischräumen austretenden Luftkanäle können in hier nicht näher dargestellter Weise durch eine Einzelluftklappe an ihrer Austrittsstelle aus den Mischräumen versperrt werden.

Die gegenseitige Anordnung von Warmluftkanal-Scheibe 1.1 und Kaltluftkanal-Scheibe 1.2 kann bezogen auf die, zwischen FIG 5 und FIG 6 durch einen Pfeil angedeutete, Fahrtrichtung des Fahrzeuges entweder gemäß FIG 5 derart erfolgen, daß die Kaltluftkanal-Scheibe 1.2 axial vor der Warmluftkanal-Scheibe 1.1 oder gemäß FIG 6 hinter der Warmluftkanal-Scheibe 1.1 angeordnet ist.

Der Ringspalt 8 zwischen dem radialen Außenrand des Schaufelkranzes 2.1 des Radial-Ventilators 2 und dem radialen Innenrand des vollringförmigen Wärmetauschers 3 ist zweckmäßigerweise derart gewählt, daß aus dem Schaufelkranz 2.1 austretenden Luftstrom, bedingt durch den Luftwiderstand des Wärmetauschers 3, ein Frischluft- bzw. Kaltluftstrom in den axial benachbarten und in diesem Bereich zugangsgeöffneten Kaltluftkanal-Scheibe 1.2 axial abgelenkt gefördert wird. Nach einer Ausgestaltung der Erfindung ist ein Radial-Ventilator 2 mit einem Schaufelkranz 2.1 vorgesehen, der sich auch noch in dem Bereich der Kaltluftkanal-Scheibe 1.2 erstreckt und somit auch direkt einen Luftstromanteil, der nicht auf den Widerstand des Wärmetauschers 3 trifft und dadurch zunächst axial abgelenkt wird, in die Kaltluftkanal-Scheibe 1.2 fördert.

## Patentansprüche

1. Heiz- und/oder Klimagerät mit luftseitiger Temperatureinstellung für ein Kraftfahrzeug mit einem Radial-Ventilator (2) und einem Mischraum (1.3 bzw.1.4) mit eingangsseitig einerseits einem durch einen Wärmetauscher (3) geführten Warmluftkanal (1.1) und andererseits einem von dem Wärmetauscher (3) getrennten Frischluft- (1.2) bzw. Umluftkanal mit durch eine Mischluftklappe (5 bzw.6) steuerbarem Übergang in den Mischraum (1.3 bzw.1.4) zur Einstellung der Ausblastemperatur der ausgangsseitig zumindest in einen Fußraum-Luftkanal (1.31 bzw. 1.41) und einen Defrost-Luftkanal (1.32 bzw. 1.42) austretenden Luftströmung **dadurch gekennzeichnet**, daß der Wärmetauscher (3) ringförmig geschlossen und von dem Warmluftkanal in der Form einer ringförmigen Warmluftkanal-Scheibe (1.1) umgeben ist, wobei letztever ein Kaltluftkanal in Form einer ringförmigen Kaltluftkanal-Scheibe (1.2) axial vorgelagert ist und daß radial innerhalb des Wärmetauschers (3) der Radial-Ventilator (2) angeordnet ist, dessen Schaufelkranz (2.1) außer zu dem Wärmetauscher (3) und damit zu der Warmluftkanal-Scheibe (1.1) auch direkt einen Luftstrom in die Kaltluftkanal-Scheibe (1.2) fördert.

2. Heiz- und/oder Klimagerät mit je einem linksseitigen und einem rechtsseitigen Fußraum-Luftkanal (1.31 bzw.1.41) und Defrost-Luftkanal (1.32 bzw.1.42) nach Anspruch 1, **gekennzeichnet durch** einem ersten linksseitigen Mischraum (1.3) mit einer ersten Mischluftklappe (5) und einen zweiten, rechtsseitigen Mischraum (1.4) mit einer zweiten Mischluftklappe (6).

3. Heiz- und/oder Klimagerät mit einem Mittelebene-Luftkanal (1.51) nach Anspruch 1 und/oder 2, **gekennzeichnet** **durch** einen Mittelebene-Mischraum (1.5) mit einer Mittelebene-Mischluftklappe (7).

4. Heiz- oder Klimagerät nach Anspruch 2 und 3, **dadurch gekennzeichnet**, daß der erste Mischraum (1.3) und der zweite Mischraum (1.4) im wesentlichen an gegenüberliegenden Umfangs-Seiten und der Mittelebene-Mischraum (1.5) am Umfang mittig dazwischen mit jeweils durch eine Mischluftklappe (5 bzw.6 bzw.7) steuerbarem Übergang relativ zu der Warmluftkanal-Scheibe (1.1) bzw. der Kaltluftkanal-Scheibe (1.2) angeordnet sind.

5. Heiz- und/oder Klimagerät nach einem der Ansprüche 1-4, **dadurch gekennzeichnet**, daß die Warmluftkanal-Scheibe (1.1) und die Kaltluftkanal-Scheibe (1.2) unmittelbar axial hintereinander liegend durch eine Trennwand (1.8) benachbart angeordnet sind, an deren mündungsseitigem Ende in den jeweiligen Mischraum (1.3 bzw.1.4 bzw.1.5) die vor die Mündung der Warmluftkanal-Scheibe (1.1) bzw. der Kaltluftkanal-Scheibe (1.2) schwenkbare jeweilige Mischluftklappe (5 bzw.6 bzw.7) drehbar (Drehachse 5.1 bzw.6.1 bzw. 7.1) angeordnet ist.

6. Heiz- und/oder Klimagerät nach einem der Anpsrüche 1-5, **gekennzeichnet durch** einen Ringspalt (8) zwischen dem radialen Außenrand des Schaufelkranzes (2.1) des Radial-Ventilators (2) und dem radialen Innenrand des vollringförmigen Wärmetauschers (3) im Sinne einer aus dem Ringspalt (8) axial in die vorgelagerte Kaltluftkanal-Scheibe (1.2) abzweigbaren Frischluft- bzw. Umluftströmung.

7. Heiz- und/oder Klimagerät nach einem der Ansprüche 1-6, **gekennzeichnet durch** einen ausgangsseitig an den ersten bzw. zweiten Mischraum (1.3 bzw.1.4) angeschlossenen Fondraumluftkanal (1.33 bzw.1.43).

8. Heiz- und/oder Klimagerät nach einem der Ansprüche 1-7, **gekennzeichnet durch** einen ausgangsseitig an die Kaltluftkanal-Scheibe (1.2) angeschlossenen Fondraum-Kaltluftkanal (1.6).

9. Heiz- und/oder Klimagerät nach Anspruch 8, **gekennzeichnet durch** einen Anschluß des Fondraum-Kaltluftkanals (1.6) radial gegenüberliegend zum Anschluß des Mittelebene-Mischraums 1.5 am Umfang der Kaltluftkanal-Scheibe (1.2).

## Claims

1. Heating and/or air-conditioning device with air-side temperature setting for a motor vehicle having a radial ventilator (2) and a mixing chamber (1.3 and 1.4) having on the input side, on the one hand, a warm air channel (1.1) directed through a heat exchanger (3) and, on the other hand, a fresh air channel (1.2) or air-circulating channel which is separate from the heat exchanger (3) with a transition, which can be controlled by means of a mixed air flap (5 and 6), into the mixing chamber (1.3 and 1.4 respectively) for the purpose of setting the blow-out temperature of the air flow which issues on the output side at least into a foot-well air channel (1.31 and 1.41 respectively) and a defrost air channel (1.32 and 1.42 respectively), characterised in that the heat exchanger (3) is closed in an annular manner and is surrounded by the warm air channel in the form of an annular warm air channel disc (1.1), with there being mounted axially in front of the latter a cold air channel in the form of an annular cold air channel disc (1.2), and in that the radial ventilator (2) is arranged radially inside the heat exchanger (3), the blade ring (2.1) of said ventilator, apart from conveying an air current to the heat exchanger (3) and with that to the warm air channel disc (1.1), also directly conveying an air current to the cold air channel disc (1.2).

2. Heating and/or air-conditioning device having a respective foot-well air channel (1.31 and 1.41) and defrost air channel (1.32 and 1.42) on the left side and on the right side according to claim 1, characterised by a first mixing chamber (1.3) on the left side with a first mixed air flap (5) and a second mixing chamber (1.4) on the right side with a second mixed air flap (6).

3. Heating and/or air-conditioning device having a central-plane air channel (1.51) according to claim 1 and/or 2, characterised by a central-plane mixing chamber (1.5) with a central-plane mixed air flap (7).

4. Heating and/or air-conditioning device according to claim 2 and 3, characterised in that the first mixing chamber (1.3) and the second mixing chamber (1.4) are arranged substantially on opposing peripheral sides and the central-plane mixing chamber (1.5) is arranged on the periphery centrally in between with a transition, which can be controlled in each case by means of a mixed air flap (5 and 6 and 7 respectively), relative to the warm air channel disc (1.1) and the cold air channel disc (1.2) respectively.

5. Heating and/or air-conditioning device according to one of the claims 1-4, characterised in that the warm air channel disc (1.1) and the cold air channel disc (1.2) are arranged lying directly axially one after the other, adjoining each other by means of a partition wall (1.8), at the end of which, opening into the respective mixing chamber (1.3 and 1.4 and 1.5), the respective mixed air flap (5 and 6 and 7), which can be swung in front of the opening of the warm air channel disc (1.1) and the cold air channel disc (1.2) respectively, is arranged in a rotatable manner (axis of rotation 5.1 and 6.1 and 7.1 respectively).

6. Heating and/or air-conditioning device according to one of the claims 1-5, characterised by an annular gap (8) between the radial outer edge of the blade ring (2.1) of the radial ventilator (2) and the radial inner edge of the fully annular heat exchanger (3) for the purposes of a fresh air or air-circulating flow which can be branched off axially out of the annular gap (8) into the cold air channel disc (1.2) mounted in front.

7. Heating and/or air-conditioning device according to one of the claims 1-6, characterised by a back seat space air channel (1.33 and 1.43) which is connected on the output side to the first and second mixing chamber (1.3 and 1.4 respectively).

8. Heating and/or air-conditioning device according to one of the claims 1-7, characterised by a back seat space cold air channel (1.6) which is connected on the output side to the cold air channel disc (1.2).

9. Heating and/or air-conditioning device according to claim 8, characterised by a connection of the back seat space cold air channel (1.6) lying radially opposite the connection of the central-plane mixing chamber 1.5 at the periphery of the cold air channel disc (1.2).

## Revendications

1. Dispositif de chauffage et/ou de climatisation avec réglage de la température de l'air arrivant pour un véhicule automobile comportant un ventilateur radial (2) et une chambre de mélange (1.3 ou 1.4) possédant, côté entrée, d'une part, un canal de circulation d'air chaud (1.1) traversant un échangeur de chaleur (3), et, d'autre part, un canal de circulation d'air frais (1.2) ou de circulation d'air recyclé, séparé de l'échangeur de chaleur (3), avec une jonction, pouvant être commandée par un volet d'air de mélange (5 ou 6), dans la chambre de mélange (1.3 ou 1.4) pour le réglage de la température d'éjection du courant d'air débouchant, côté sortie, dans au moins un canal (1.31 ou 1.41) de circulation d'air au niveau des pieds et dans un canal de circulation d'air de dégivrage (1.32 ou 1.42), caractérisé par le fait que l'échangeur de chaleur (3) est fermé sous la forme d'un anneau et est entouré par le canal de circulation d'air chaud sous la forme d'un disque annulaire (1.1) définissant le canal de circulation d'air chaud, ce disque étant disposé axialement en avant d'un canal de circulation d'air froid réalisé sous la forme d'un disque annulaire (1.2) définissant un canal de circulation d'air froid, et que radialement à l'intérieur de l'échangeur de chaleur (3) est disposé le ventilateur radial (2), dont la couronne de pales (2.1) entraîne non seulement de l'air en direction de l'échangeur de chaleur (3) et par conséquent en direction du disque (1.1) définissant le canal de circulation d'air chaud, mais également directement un courant d'air dans le disque (1.2) définissant le canal de circulation d'air froid.

2. Dispositif de chauffage et/ou de climatisation comportant respectivement un canal de circulation d'air au niveau des pieds à gauche ou à droite (1.31 ou 1.41) et un canal de circulation d'air de dégivrage (1.32 ou 1.42) suivant la revendication 1, caractérisé par une première chambre de mélange (1.3) située sur le côté gauche et comportant un premier volet (5) de guidage du mélange d'air, une seconde chambre de mélange (1.4) située sur le côté droit et possédant un second volet (6) de guidage du mélange d'air.

3. Dispositif de chauffage et/ou de climatisation comportant un canal de circulation d'air (1.51) dans le plan central suivant la revendication 1 et/ou 2, caractérisé par une chambre de mélange (1.5) dans le plan central, comportant un volet (7) de guidage du mélange d'air situé dans le plan central.

4. Dispositif de chauffage et/ou de climatisation suivant les revendications 2 et 3, caractérisé par le fait que la première chambre de mélange (1.3) et la seconde chambre de mélange (1.4) sont disposées essentiellement sur des côtés circonférentiels opposés et la chambre de mélange (1.5) situés dans le plan central est disposée en position centrée sur la périphérie entre les première et seconde chambres de mélange, avec respectivement une jonction, qui peut être commandée par un volet (5 ou 6 ou 7) de guidage du mélange d'air avec le disque (1.1) définissant le canal de circulation d'air chaud et le disque (1.2) définissant le canal de circulation d'air froid.

5. Dispositif de chauffage et/ou de climatisation suivant l'une des revendications 1-4, caractérisé par le fait que le disque (1.1) définissant le canal de circulation d'air chaud et le disque (1.2) définissant le canal de circulation d'air froid sont disposés directement l'un derrière l'autre axialement et au voisinage l'un de l'autre en étant séparés par une paroi de séparation (1.8), sur l'extrémité de laquelle, côté embouchure, est monté rotatif (axe de rotation 5.1 ou 6.1 ou 7.1), dans la chambre de mélange respective (1.3 ou 1.4 ou 1.5), le volet respectif (5 ou 6 ou 7) de guidage du mélange d'air, qui peut pivoter devant l'embouchure du disque (1.1) définissant le canal de circulation d'air chaud ou le disque (1.2) définissant le canal de circulation d'air froid.

6. Dispositif de chauffage et/ou de climatisation suivant l'une des revendications 1-5, caractérisé par une fente annulaire (8) située entre le bord extérieur radial de la couronne (2.1) du ventilateur radial (2) et la paroi intérieure radiale de l'échangeur de chaleur (30) en forme d'anneau complet, dans le sens d'un courant d'air frais ou d'un courant d'air à recirculation qui peut être dérivé axialement à partir de la fente annulaire (8) pour être introduit dans le disque (1.2), qui est monté en amont et définit le canal de circulation d'air froid.

7. Dispositif de chauffage et/ou de climatisation suivant l'une des revendications 1-6, caractérisé par un canal (1.3 ou 1.43) de circulation d'air pour l'espace de fond, raccordé côté sortie à la première ou à la seconde chambre de mélange (1.3 ou 1.4).

8. Dispositif de chauffage et/ou de climatisation suivant l'une des revendications 1-7, caractérisé par un canal (1.6) de circulation d'air froid pour l'espace de fond, raccordé côté sortie au disque (1.2) définissant le canal de circulation d'air froid.

9. Dispositif de chauffage et/ou de climatisation suivant la revendication 8, caractérisé par un raccordement du canal (1.6) de circulation d'air froid de l'espace du fond, radialement en vis-à-vis du raccordement de la chambre de mélange (1.5) située dans le plan médian, sur le pourtour du disque (1.2) définissant le canal de circulation d'air froid.
